# EUROPÄISCHE PATENTSCHRIFT

(11) **EP 2 793 662 B1**
(45) Veröffentlichungstag und Bekanntmachung des Hinweises auf die Patenterteilung: **23.11.2016**
(21) Anmeldenummer: 12772275.9
(22) Anmeldetag: 02.10.2012
(51) Int. Cl.: A47J 31/08

(54) **FILTERPAPIEREINSATZ**
FILTER PAPER INSERT
UTILISATION DE PAPIER À FILTRE

(30) Priorität: 23.12.2011 EP 11195667
(43) Veröffentlichungstag der Anmeldung: 29.10.2014
(73) Patentinhaber: Melitta Europa GmbH & Co. KG, 32427 Minden (DE)
(72) Erfinder: AUS DER FÜNTEN, Sandra, 33739 Bielefeld (DE); PERTSCH, Eduard, 32469 Petershagen (DE)
(74) Vertreter: Dantz, Jan Henning
(86) Internationale Anmeldenummer: PCT/EP2012/069417
(87) Internationale Veröffentlichungsnummer: WO 2013/091921

(56) Entgegenhaltungen:
- EP-A1- 2 067 420
- EP-B1- 0 763 994
- DE-A1- 1 951 707
- DE-A1- 2 802 240
- DE-A1- 19 516 800

## Beschreibung

Die vorliegende Erfindung betrifft einen Filterpapiereinsatz zur Herstellung von Brühgetränken nach dem Oberbegriff des Anspruches 1.

Die EP 763 994 offenbart einen Filter für Aufgussgetränke, bei dem zwei Lagen aus einem faserigen Filtermaterial vorgesehen sind, in die Poren eingebracht sind. Diese Poren besitzen eine geringe Porenweite zwischen 0,1 mm bis 0,4 mm, wobei in einem Randbereich der Poren eine gewisse Faserdichte vorhanden ist. Dadurch können Pulverteilchen, wie Kaffeeteilchen, auch in relativ kleiner Größe zurückgehalten werden. Problematisch bei diesen kleinen Poren ist allerdings, dass auch Ölmoleküle zurückgehalten werden, die eine Größe zwischen 25 bis 100 µm besitzen. Solche Öle, insbesondere Kaffeeöle im Kaffeegetränk, sind Geschmacksträger und die Filterung dieser Ölmoleküle führt daher zu einer Verringerung der Intensität des Kaffeegeschmacks.

Die EP 2 067 420 offenbart einen aus Filterpapier hergestellten Filtereinsatz, bei dem in dem Filterpapier Perforationen eingebracht sind, wobei mehrere Bereiche mit unterschiedlichen Durchlässigkeiten vorhanden sind. Auch hier besteht das Problem, dass die kleinen Perforationen nicht nur Pulverteilchen filtern, sondern auch große Ölmoleküle als Geschmacksträger.

Die DE 195 16 800 offenbart einen Filterpapiereinsatz zur Herstellung von Aromaauszügen aus Kaffee oder Tee, bei dem eine Vielzahl von Schlitzen eingebracht ist, die linienartig durch Einschnitte gebildet sind. Die Schlitze können sich abhängig vom hydrostatischen Druck während des Brühvorganges öffnen. Das Öffnen der Schlitze durch den hydrostatischen Druck führt allerdings zu einer hohen Durchlässigkeit, so dass die Verweilzeit des aufgebrühten Wassers in dem Filterpapiereinsatz relativ kurz ist und Kaffeemehl in den Kaffeeextrakt gelangen kann. Zudem ist der Filterpapiereinsatz mit den gleichmäßig pro Flächeneinheit ausgebildeten Schlitzen über seine Höhe gleichmäßig durchlässig, so dass unterschiedliche Mengen von Kaffee oder Tee mit unterschiedlichen Brühzeiten gebrüht werden.

Die EP 2 067 420 offenbart einen Filtereinsatz aus gegenüberliegenden Seitenwänden, die randseitig miteinander verbunden sind und eine Öffnung aufweisen für das Befüllen von beispielsweise Kaffee. Es sind ferner Perforationslöcher unterschiedlichen Durchmessers in unterschiedlichen Zonen entlang der Seitenwände vorgesehen.

Die DE 195 16 800 beschreibt einen Filterpapiereinsatz zur Herstellung von Aromaauszügen aus Tee oder Kaffee, der auf einer nutzbaren Filterfläche ganz oder bereichsweise linienartige Schlitze aufweist.

Die DE 28 02 240 offenbart einen Filter zur Herstellung von Brühgetränken, der eine Vielzahl von Schlitzen aufweist. Die Anzahl der Schlitze pro Fläche variiert dabei in einem oberen und in einem unteren Bereich des Filters.

Es ist daher Aufgabe der vorliegenden Erfindung, einen Filterpapiereinsatz zur Herstellung von Brühgetränken zu schaffen, bei dem das Geschmackserlebnis optimiert ist und zudem die Brühzeiten optimal eingestellt sind.

Diese Aufgabe wird mit einem Filterpapiereinsatz mit den Merkmalen des Anspruches 1 gelöst.

Erfindungsgemäß sind in dem Filterpapier eine Vielzahl von Schlitzen zur Erhöhung der Durchlässigkeit eingebracht, wobei in einem benachbart zu dem Boden angeordneten unteren Bereich des Filterpapiereinsatzes weniger Schlitze pro Fläche als in einem oberen, benachbart zu einer Einfüllöffnung angeordneten Bereich ausgebildet sind. Dadurch ist gewährleistet, dass die Verweildauer des aufgebrühten Wassers in dem Filterpapiereinsatz auch beim Aufbrühen kleiner Mengen ausreichend lange ist. Bei größeren Mengen wird durch die höhere Anzahl an Schlitzen pro Flächeneinheit gewährleistet, dass das aufgebrühte Wasser ablaufen kann, wenn ein vorbestimmter Füllstand in dem Filterpapiereinsatz erreicht wird. Die Anordnung von Schlitzen in dem Filterpapier führt dazu, dass das Kaffeemehl weitgehend zurückgehalten wird, aber die Öle als Geschmacksträger eher durchgelassen werden. Dadurch erhöht sich der Gehalt an Kaffeeöl im Getränk, was zu einer Intensivierung des Kaffeegeschmacks führt.

Gemäß einer bevorzugten Ausgestaltung der Erfindung sind die Schlitze in dem oberen Bereich länger ausgebildet als in dem unteren Bereich. Dadurch wird die Durchlässigkeit in dem oberen Bereich weiter erhöht. Da die Fettanteile leichter sind als Wasser und daher eher im oberen Bereich des Filterpapiereinsatzes vorliegen, wird durch die Ausbildung der längeren Schlitze im oberen Bereich der Gehalt an Kaffeeöl erhöht.

Vorzugsweise sind die Schlitze wellenförmig ausgebildet. Dadurch bleiben die Schlitze vergleichsweise stabil, auch wenn ein hydrostatischer Druck an dem Filterpapiereinsatz anliegt. Dies reduziert die Durchlässigkeit für Kaffeemehl und gewährleistet aber eine Öffnungsgröße, die auch größere Ölmoleküle durchlässt. Die Länge der Schlitze kann dabei größer als 1,5 mm, insbesondere größer als 2,5 mm, sein. Die Amplitude der wellenförmigen Schlitze kann mindestens 20 %, vorzugsweise mindestens 30 %, der Länge der Schlitze betragen. Die Schlitze können beispielsweise s-förmig sein, wobei das "s" horizontal, vertikal oder schräg ausgerichtet sein kann.

Gemäß einer weiteren Ausgestaltung ist zwischen dem oberen Bereich und dem unteren Bereich ein mittlerer Bereich vorgesehen, in dem mehr Schlitze als im unteren Bereich und weniger Schlitze als im oberen Bereich pro Fläche vorgesehen sind. Dadurch werden drei Aromazonen an dem Filterpapiereinsatz bereitgestellt, die eine unterschiedliche Durchlässigkeit aufweisen.

Für ein optisch ansprechendes Erscheinungsbild sind die Schlitze in horizontalen Reihen angeordnet, wobei der Abstand zwischen den Schlitzen zwischen 5 mm und 40 mm, insbesondere 8 mm und 20 mm, liegt. Der Abstand zwischen den Schlitzen im oberen Bereich ist dabei vorzugsweise kleiner als im unteren Bereich, vorzugsweise um mehr als 20 %. Ferner können die Schlitze im unteren Bereich kürzer sein als im oberen Bereich, vorzugsweise ebenfalls um mehr als 20 %.

Um die Bereiche mit unterschiedlichen Durchlässigkeiten auch optisch voneinander zu trennen, sind vorzugsweise zumindest der obere und der untere Bereich durch eine Prägung voneinander getrennt. Beispielsweise können rahmenförmige Prägungen vorgesehen sein, die den unteren, mittleren und/oder den oberen Bereich jeweils einfassen.

Der erfindungsgemäße Filterpapiereinsatz ermöglicht vorzugsweise eine Filterung von Kaffee derart, dass der Anteil an Kaffeeöl nach einer Filtration größer als 0,025 %, insbesondere größer als 0,03 %, ist. Um den Gehalt an Kaffeeöl zu ermitteln, kann die Filterung durch Aufguss mit einer Einwaage von etwa 50g Kaffee pro 1100mll Heißwasser erfolgen. Dadurch wird der Gehalt an Kaffeeöl verglichen mit herkömmlichen Filterpapiereinsätzen erheblich erhöht, insbesondere sogar mehr als verdoppelt, was zu einer Intensivierung des Geschmacks führt.

Gemäß einer weiteren Ausgestaltung der Erfindung ist mindestens ein Bereich des Filterpapiers mit einem Schlitz geprägt. Die Prägung ist dabei im Wesentlichen topfförmig ausgebildet und der Schlitz ist dann an einem Bodenabschnitt der Prägung ausgebildet. Die Kontur der Prägung kann dabei an die Kontur des Schlitzes angepasst sein. Dadurch wird die Extraktion der Kaffeeöle durch das Prägen im Bereich der Schlitze noch optimiert, denn es hat sich herausgestellt, dass durch das Prägen die Zellstofffasern im Bereich der Schlitze mit starkem Druck verformt werden, so dass auf einer Seite des Filterpapiers eine sichtbare Wölbung bzw. topfförmige Vertiefung entsteht. Die in einem Bodenabschnitt dieser Prägung liegenden Schlitze können sich durch die Prägung noch besser öffnen, so dass Kaffee beim Aufbrühen des Kaffees gezielt durch die Schlitze geleitet wird.

Vorzugsweise sind die Prägungen an beiden Lagen des Filterpapiers jeweils nach außen hervorstehend angeordnet. Dadurch wird auch die Handhabung des Filterpapiereinsatzes beim Herausnehmen aus der Verpackung und beim Öffnen erleichtert.

Die Erfindung wird nachfolgend anhand von mehreren Ausführungsbeispielen mit Bezug auf die beigefügten Zeichnungen näher erläutert. Es zeigen:
- Figur 1: eine Ansicht eines erfindungsgemäßen Filterpapiereinsatzes;
- Figur 2: eine Ansicht eines weiteren Ausführungsbeispiels eines erfindungsgemäßen Filterpapiereinsatzes;
- Figur 3: eine Ansicht eines erfindungsgemäßen Filterpapiereinsatzes mit Verprägungen, und
- Figuren 4A und 4B: zwei Detailansichten einer Prägung des Filterpapiereinsatzes der Figur 3 mit einem Schlitz.

Ein Filterpapiereinsatz 1 umfasst zwei Lagen 2 aus einem Filterpapier, die zur Bildung eines befüllbaren Innenraumes an drei Seiten miteinander verbunden sind. An einer Seite 3 sind die Lagen über eine Faltkante miteinander verbunden, während an einem Boden 4 und einer gegenüberliegenden Seite 5 Prägenähte 6 und 7 vorgesehen sind, die die Lagen 2 miteinander verbinden. Der Filterpapiereinsatz 1 ist im Wesentlichen kegelstumpfförmig ausgebildet, wobei auch andere Formen von Filterpapiereinsätzen 1 eingesetzt werden können. Zudem kann die Faltkante statt an einer Seite auch am Boden angeordnet sein oder es können statt der gezeigten Prägenähte 6 und 7 nur eine einzige Prägenaht oder mehr Prägenähte zur Verbindung der Lagen 2 vorgesehen sein.

Das Filterpapier besteht aus einem faserigen Material auf Zellulosebasis und/oder aus Fasern aus synthetischen Materialien, wobei vorliegend auch dann von Filterpapier gesprochen wird, wenn das Material eine Mischung zwischen einem Papier und einem Vliesstoff darstellt. Das Flächengewicht des Materials liegt beispielsweise in einem Bereich zwischen 20 bis 100 g/m².

Der Filterpapiereinsatz 1 umfasst einen unteren Bereich 8, der benachbart zu dem Boden 4 angeordnet ist, einem mittleren Bereich 9 sowie einen oberen Bereich 10, der benachbart zu einer Einfüllöffnung des Filterpapiereinsatzes 1 angeordnet ist. In dem unteren Bereich sind wellenförmige Schlitze 11, in dem mittleren Bereich 9 sind wellenförmige Schlitze 13 und in dem oberen Bereich sind wellenförmige Schlitze 15 in das Filterpapier eingebracht, insbesondere durch Schneiden im Rotationsverfahren. Die Länge der wellenförmigen Schlitze 11 im unteren Bereich 8 liegt zwischen 2,5 mm und 3,9 mm, insbesondere 3 mm und 3,4 mm. Die Schlitze 11 sind in horizontalen Reihen angeordnet und der Abstand zwischen zwei Schlitzen beträgt zwischen 10 mm und 16 mm, insbesondere 12 mm bis 14 mm. In dem unteren Bereich 8, der als Anbrühzone dient, ist dadurch die Durchlässigkeit am kleinsten, um ein Quellen des Kaffeemehls zu ermöglichen.

In dem mittleren Bereich 9 besitzen die wellenförmigen Schlitze eine Länge zwischen 3 mm und 4,6 mm, insbesondere 3,6 mm und 4,0 mm. Die Schlitze 13 sind in horizontalen Reihen angeordnet, wobei der Abstand zwischen zwei Schlitzen 7 mm bis 15 mm, insbesondere 10 mm bis 12 mm, beträgt. Der mittlere Bereich 9 dient als Hauptbrühzone und die wellenförmigen Schlitze 13 sorgen für eine optimale Kontaktzeit. Die Größe der wellenförmigen Schlitze 13 sorgt dafür, dass gelöste Ölmoleküle hindurchtreten können.

In dem oberen Bereich 10 sind wellenförmige Schlitze 15 mit einer Länge zwischen 3,5 mm bis 5,1 mm, insbesondere 4,0 mm bis 4,6 mm, ausgebildet. Die Schlitze 15 sind in horizontalen Reihen angeordnet, wobei der Abstand zwischen den Schlitzen zwischen 5 mm und 13 mm, insbesondere zwischen 7 mm bis 11 mm, beträgt. Der obere Bereich 10 sorgt dadurch für einen schnellen Ablauf des Brühwassers. Zudem sorgt der schnelle Ablauf im oberen Bereich 10 für ein ausgewogenes Bitterstoffverhältnis. Auch die oben aufschwimmenden Öle beim Brühvorgang können optimal in den Kaffeeextrakt gelangen und werden durch den Filterpapiereinsatz 1 nicht zurückgehalten.

Die wellenförmige Ausbildung der Schlitze 11, 13 und 15 sorgt dafür, dass das Filterpaper stabil bleibt und die Schlitze 11, 13 und 15 sich während des Brühvorganges nur soweit öffnen, dass Kaffeeöl hindurchgelangen kann, aber Kaffeemehl weitestgehend im Filterpapiereinsatz 1 zurückbleibt.

Um den unteren Bereich 8 ist eine rahmenförmige Prägung 12, um den mittleren Bereich 9 ist eine rahmenförmige Prägung 14 und um den oberen Bereich ist eine rahmenförmige Prägung 16 vorgesehen. Dadurch sind die Bereiche 8, 9 und 10 optisch voneinander getrennt. Bei Bedarf kann auf die rahmenförmigen Prägungen 12, 14 und 16 auch verzichtet werden.

Die Wirkung der wellenförmigen Schlitze 11, 13 und 15 wurde zudem in einem Versuch zur Kaffeeölbestimmung aus einem Kaffeegetränk bestimmt. Dabei wurde bei einem Vergleichsbeispiel ein Filterpapiereinsatz verwendet, der eine Vielzahl von Poren im Filterpapier aufweist.

Im Vergleich dazu wurde ein erfindungsgemäßer Filterpapiereinsatz 1 verwendet. Der verwendete Filterpapiereinsatz 1 besaß im unteren Bereich 8 wellenförmige Schlitze mit einer Länge von 3,2 mm, deren Abstand zueinander 13,0 mm betrug. Im unteren Bereich 8 waren zwei horizontale Reihen von Schlitzen 11 vorgesehen.

In dem mittleren Bereich 9 waren wellenförmige Schlitze 13 mit einer Schnittlänge von 3,8 mm vorgesehen. Der horizontale Abstand zwischen den Schlitzen 13 betrug 11,0 mm. In dem mittleren Bereich 9 waren vier horizontale Reihen von Schlitzen 13 vorgesehen.

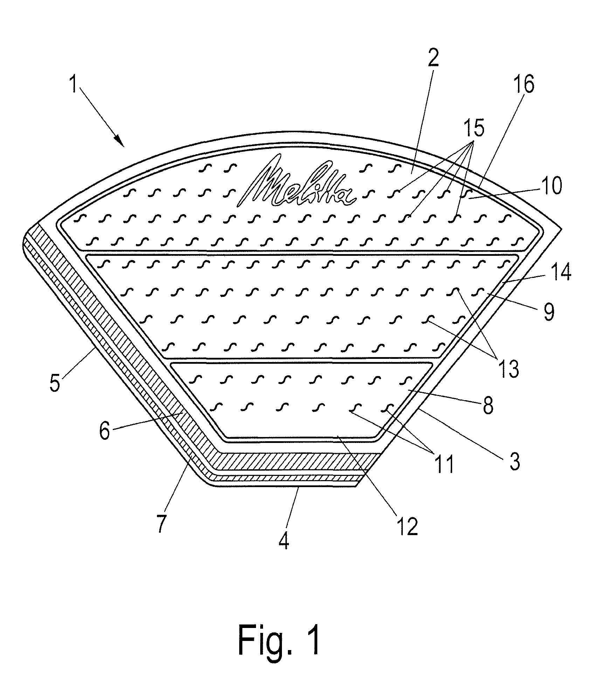

In dem oberen Bereich 10 waren wellenförmige Schlitze 15 mit einer Länge von 4,3 mm eingebracht. Der Abstand zwischen den Schlitzen 15 in horizontaler Richtung betrug 9,0 mm. Im oberen Bereich 10 waren vier horizontale Reihen von Schlitzen 15 vorgesehen, wobei die Proportionen in etwa der Darstellung der Figur 1 entsprechen.

In mehreren Versuchen wurde dann der Fettgehalt des mit heißem Wasser im Aufgussverfahren gebrühten Kaffees nach der Soxhlet-Methode bestimmt:
In dem Versuch wurden drei verschiedene Filterpapiereinsätze im Hinblick auf den Kaffeeölgehalt untersucht. Ein Filterpapiereinsatz enthielt keine Poren, ein Filterpapiereinsatz enthielt kleine kreisförmige Poren (Aromaporen) und ein Filterpapiereinsatz war erfindungsgemäß mit den wellenförmigen Schlitzen ausgebildet, wie dies zu Figur 1 beschrieben wurde. Für die Analyse wurde jeweils ein Handaufguss hergestellt, bei dem 1100ml kochendes Wasser verwendet wurden. Das kochende Wasser wurde in einen Filterpapiereinsatz mit der Größe 1 x 4 mit einer Menge an 48g an gemahlenen Kaffeemehl eingefüllt.

Dabei wurde der Kaffee mit dem kochenden Wasser zunächst mit ca. 150ml angefeuchtet und 30s vorgebrüht. Anschließend wurde das heiße Wasser bis zum oberen Rand des Filterpapiereinsatzes eingegossen und stetig das restliche Wasser zugegeben.

Im Ergebnis besitzt der Kaffee aus dem Filterpapiereinsatz ohne Aromaporen nur einen Kaffeeölanteil von 0,015%, während der mit dem herkömmlichen Filterpapiereinsatz mit Aromaporen gefilterte Kaffee einen Kaffeeölanteil gemittelt von 0,018% aufweist. Demgegenüber ist der Anteil an Kaffeeöl bei dem erfindungsgemäßen Filterpapiereinsatz im Mittel bei 0,037 %, also fast doppelt so hoch. Dies hängt damit zusammen, dass Kaffeeöl bei den kleinporigen Öffnungen zurückgehalten wird, während bei dem erfindungsgemäßen Filterpapiereinsatz gemäß Figur 1 durch die längeren Schlitze 11, 13 und 15 ein erhöhter Anteil an Kaffeeöl durchgelassen wird. Dadurch kommt es zu der positiven Aromaverstärkung des Kaffees.

| **Filterpapiereinsatz** | **kombiniert mit Kaffeesorte** | **ergibt Fettgehalt in % (Kaffeegetränk)** |
|---|---|---|
| Filterpapiereinsatz OHNE Aromaporen | Filterkaffee vorgemahlen Melitta | **0,015** |
| Filterpapiereinsatz mit Aromaporen | Filterkaffee vorgemahlen Melitta | **0,018** |
| erfindungsgemäßer Filterpapiereinsatz | Filterkaffee vorgemahlen Melitta | **0,037** |

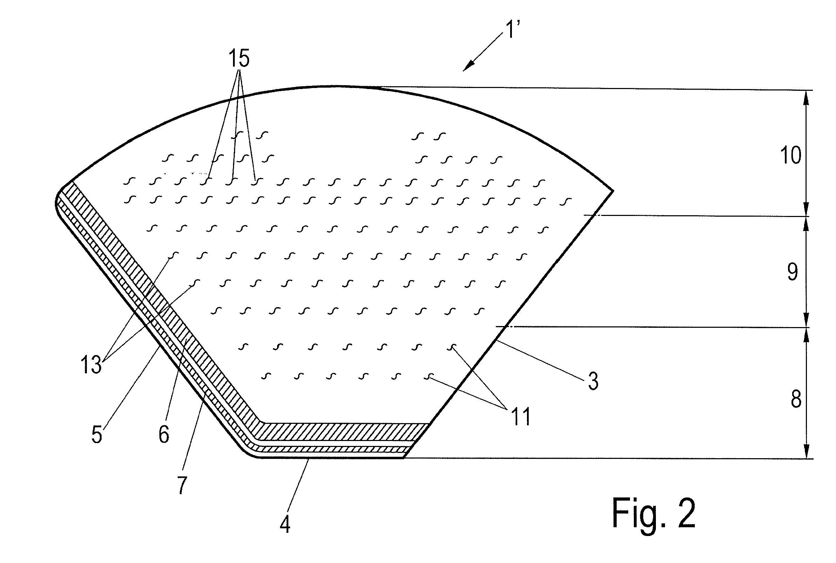

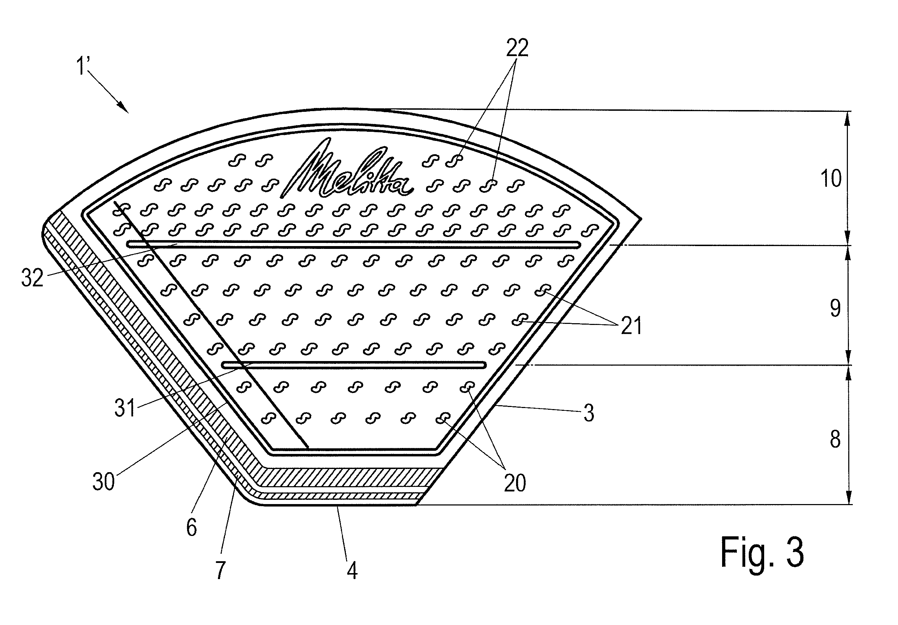

In Figur 2 ist eine modifizierte Ausführungsform eines erfindungsgemäßen Filterpapiereinsatzes 1' gezeigt, der für die gleichen Bauteile die gleichen Bezugszeichen wie bei dem ersten Ausführungsbeispiel besitzt. Der Filterpapiereinsatz 1' ist aus zwei Lagen 2 aus einem Filterpapier gebildet, die an einer Seite 3 über eine Faltkante und einen Boden 4 sowie einer weiteren Seite 5 über Prägenähte 6 und 7 miteinander verbunden sind. Anders als bei dem vorangegangenen Ausführungsbeispiel sind keine weiteren Prägungen vorgesehen, sondern lediglich Schlitze 11, 13 und 15 in das Filterpapier eingebracht. Die wellenförmigen Schlitze 11, 13 und 15 sind dabei in einem unteren Bereich 8 kürzer ausgebildet als in einem mittleren Bereich 9, wobei die Schlitze 13 in dem mittleren Bereich 9 wiederum kürzer ausgebildet sind als in einem oberen Bereich 10 mit den Schlitzen 15. Auch die Anzahl der Schlitze 11, 13 und 15 pro Fläche nimmt von unten nach oben zu, wobei sowohl die Schlitzlänge als auch die Schlitzanzahl erhöht wird. Der in Figur 3 gezeigte Filterpapiereinsatz 1' kann in dieser Form ohne weitere Prägungen benutzt werden, um die erfindungsgemäßen Vorteile zu erreichen.

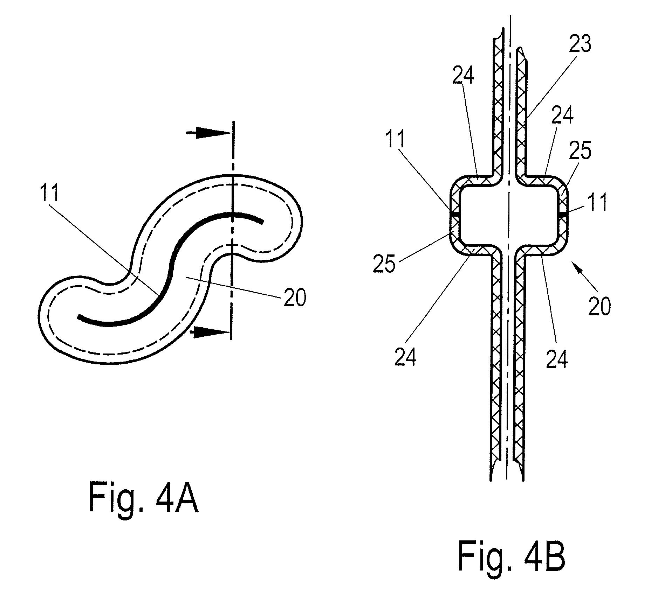

In einer weiteren Ausführungsform, die in Figur 3 gezeigt ist, wird die in Figur 3 gezeigte Schlitzanordnung mit weiteren Prägungen kombiniert, die in Figur 4 gezeigt ist. Der untere Bereich 8 ist vom mittleren Bereich 9 über einen Prägestrich 31 getrennt, während der mittlere Bereich 9 von dem oberen Bereich 10 durch einen Prägestrich 32 getrennt ist. Die Schlitze sind dabei in einem Bereich angeordnet, der von einem Rahmen 30 umgeben ist. Der Rahmen 30 besitzt eine im Wesentlichen kegelstupfförmige Kontur und ist jeweils in einem Abstand zum Rand 3 und den Prägenähten 6 und 7 angeordnet.

Bei dem in Figur 3 gezeigten Ausführungsbeispiel sind die Schlitze 11, 13 und 15 jeweils innerhalb einer Prägung 20, 21 und 22 angeordnet. Die Prägungen 20, 21 und 22 können dabei vor der Herstellung der Schlitze 11, 13, 15, nach dem Herstellen der Schlitze 11, 13, 15 oder gleichzeitig mit der Herstellung der Schlitze 11, 13, 15 eingebracht werden. Die Prägungen 20, 21 und 22 sind wellenförmig ausgebildet und umgeben die Schlitze 11, 13 und 15, wobei die Prägungen 20, 21 und 22 eine Breite zwischen 0,5 mm und 2 mm, insbesondere 0,7 mm bis 1,3 mm, besitzen. Die Länge der Prägungen 20, 21 und 22 ist an die Länge der Schlitze 11, 13 und 15 angepasst und liegt vorzugsweise in einem Bereich zwischen 2 mm und 6 mm, je nach Länge der Schlitze 11, 13 und 15.

In den Figuren 4A und 4B ist eine Prägung 20 im Querschnitt dargestellt, wobei die Prägungen 21 und 22 ähnlich ausgebildet sind und lediglich eine etwas größere Länge aufweisen. Die Prägung 20 ist im Querschnitt im Wesentlichen topfförmig ausgebildet und umfasst Seitenwände 24, die von dem ebenen Filterpapier 23 im Wesentlichen senkrecht hervorstehen, wobei die Seitenwände 24 über einen Bodenabschnitt 25 miteinander verbunden sind. An dem Bodenabschnitt 25 ist der wellenförmige Schlitz 11 eingeschnitten, wobei der Schlitz 11 im Wesentlichen mittig an dem Bodenabschnitt 25 angeordnet ist. An beiden Lagen aus Filterpapier sind dabei Schlitze 11 und Prägungen 20 eingebracht, die jeweils nach außen hervorstehen, so dass benachbarte Filterpapiereinsätze leichter aus einer Verpackung entnommen werden können. Die Tiefe bzw. Höhe der Prägungen 20, 21 und 22 kann beispielsweise in einem Bereich zwischen 0,05 bis 0,6 mm, insbesondere 0,1 bis 0,4 mm, liegen. Die Prägungen 20, 21 und 22 sorgen dafür, dass das Filterpapier in dem geprägten Bereich bei der Verformung einem starken Druck ausgesetzt wird, so dass sich die Schlitze 11, 13 und 15 leichter öffnen lassen. Dadurch kann der Gehalt an Kaffeeöl in dem gebrühten Getränk weiter erhöht werden.

### Bezugszeichenliste

- 1, 1': Filterpapiereinsatz
- 2: Lage
- 3: Seite
- 4: Boden
- 5: Seite
- 6: Prägenaht
- 7: Prägenaht
- 8: unterer Bereich
- 9: mittlerer Bereich
- 10: oberer Bereich
- 11: Schlitz
- 12: Prägung
- 13: Schlitz
- 14: Prägung
- 15: Schlitze
- 16: Prägung
- 20: Prägung
- 21: Prägung
- 22: Prägung
- 23: Filterpapier
- 24: Seitenwand
- 25: Bodenabschnitt
- 30: Rahmen
- 31: Prägestrich
- 32: Prägestrich

## Patentansprüche

1. Filterpapiereinsatz (1) zur Herstellung von Brühgetränken, insbesondere Kaffee oder Tee, mit mindestens zwei Lagen (2) aus Filterpapier, die an einem Boden (4) und an gegenüberliegenden Seitenwänden (3, 5) zur Bildung eines befüllbaren Innenraumes miteinander verbunden sind, wobei in dem Filterpapier eine Vielzahl von Schlitzen (11, 13, 15) zur Erhöhung der Durchlässigkeit eingebracht ist, **dadurch gekennzeichnet, dass** in einem benachbart zum Boden (4) angeordneten unteren Bereich (8) des Filterpapiereinsatzes (1) weniger Schlitze (11) pro Fläche als in einem oberen benachbart zu einer Einfüllöffnung angeordneten Bereich (10) ausgebildet sind und mindestens ein Bereich des Filterpapiers mit einem Schlitz (11, 13, 15) geprägt ist, wobei die Prägung (20, 21, 22) im Wesentlichen topfförmig ausgebildet ist und der Schlitz (11, 13, 15) an einem Bodenabschnitt (25) der Prägung (20, 21, 22) ausgebildet ist.

2. Filterpapiereinsatz nach Anspruch 1, **dadurch gekennzeichnet, dass** die Schlitze (15) in dem oberen Bereich (10) länger ausgebildet sind als in dem unteren Bereich (12).

3. Filterpapiereinsatz nach Anspruch 1 oder 2, **dadurch gekennzeichnet, dass** die Schlitze (11, 13, 15) wellenförmig ausgebildet sind.

4. Filterpapiereinsatz nach einem der vorhergehenden Ansprüche, **dadurch gekennzeichnet, dass** die Länge der Schlitze (11, 13, 15) größer als 1,5 mm, insbesondere größer als 2,5 mm, ausgebildet ist.

5. Filterpapiereinsatz nach einem der vorhergehenden Ansprüche, **dadurch gekennzeichnet, dass** die Amplitude der wellenförmigen Schlitze (11, 13, 15) mindestens 20 %, vorzugsweise mindestens 30 % der Länge der Schlitze (11, 13, 15) beträgt.

6. Filterpapiereinsatz nach einem der vorhergehenden Ansprüche, **dadurch gekennzeichnet, dass** die Länge der Schlitze (11, 13, 15) kleiner als 6 mm, insbesondere kleiner als 5mm oder 4mm, ausgebildet ist.

7. Filterpapiereinsatz nach einem der vorhergehenden Ansprüche, **dadurch gekennzeichnet, dass** zwischen dem oberen Bereich (10) und dem unteren Bereich (8) ein mittlerer Bereich (9) vorgesehen ist, in dem mehr Schlitze (13) als in dem unteren Bereich (12) und weniger Schlitze (13) als in dem oberen Bereich (16) vorgesehen sind.

8. Filterpapiereinsatz nach einem der vorhergehenden Ansprüche, **dadurch gekennzeichnet, dass** die Schlitze (11, 13, 15) in horizontalen Reihen angeordnet sind und der Abstand zwischen den Schlitzen (11, 13, 15) zwischen 5 mm und 40 mm, insbesondere 8 mm und 20 mm, liegt.

9. Filterpapiereinsatz nach Anspruch 8, **dadurch gekennzeichnet, dass** der Abstand zwischen den Schlitzen (11, 13, 15) im oberen Bereich (10) kleiner ist als im unteren Bereich (8), vorzugsweise um mehr als 20 %.

10. Filterpapiereinsatz nach einem der vorhergehenden Ansprüche, **dadurch gekennzeichnet, dass** die Schlitze (11) im unteren Bereich (8) kürzer sind als im oberen Bereich (10), vorzugsweise um mehr als 20 %.

11. Filterpapiereinsatz nach einem der vorhergehenden Ansprüche, **dadurch gekennzeichnet, dass** zumindest der untere und der obere Bereich (8, 10) durch eine Prägung voneinander getrennt sind.

12. Filterpapiereinsatz nach einem der vorhergehenden Ansprüche, **dadurch gekennzeichnet, dass** der untere, der mittlere und der obere Bereich (8, 9, 10) jeweils von einer rahmenförmigen Prägung umgeben sind.

13. Filterpapiereinsatz nach einem der vorhergehenden Ansprüche, **dadurch gekennzeichnet, dass** die Schlitze (11, 13, 15) s-förmig ausgebildet sind.

14. Filterpapiereinsatz nach einem der vorhergehenden Ansprüche, **dadurch gekennzeichnet, dass** der Anteil an Kaffeeöl nach einer Filtration mit dem Filterpapiereinsatz (1) von 50g Kaffeemehl und 1100ml heißem Wasser größer als 0,025 %, insbesondere größer als 0,03 %, ist.

15. Filterpapiereinsatz nach einem der vorhergehenden Ansprüche, **dadurch gekennzeichnet, dass** die Prägung (20, 21, 22) an beiden Lagen (2) des Filterpapiers jeweils nach außen hervorsteht.

## Claims

1. Filter-paper insert (1) for making brewed beverages, especially coffee or tea, comprising at least two layers (2) of filter paper, which are connected to each other at a base (4) and at opposite side walls (3, 5) for forming an interior space that can be filled, wherein a plurality of slots (11, 13, 15) are introduced into the filter paper for increasing permeability, **characterized in that** in a lower region (8) of the filter-paper insert (1) arranged adjacent to the base (4) fewer slots (11) per surface area are formed than in an upper region (10) arranged adjacent to a filling opening and at least one region of the filter paper is crimped with a slot (11, 13, 15), wherein the crimped portion (20, 21, 22) is arranged in a substantially pot-shaped way and the slot (11, 13, 15) is arranged on a base section (25) of the crimped portion (20, 21, 22).

2. Filter-paper insert according to claim 1, **characterized in that** the slots (15) in the upper region (10) are longer than in the bottom region (12).

3. Filter-paper insert according to claim 1 or 2, **characterized in that** the slots (11, 13, 15) are shaped in the manner of waves.

4. Filter-paper insert according to one of the preceding claims, **characterized in that** the length of the slots (11, 13, 15) is greater than 1.5 mm, especially greater than 2.5 mm.

5. Filter-paper insert according to one of the preceding claims, **characterized in that** the amplitude of the wave-shaped slots (11, 13, 15) is at least 20%, preferably at least 30% of the length of the slots (11, 13, 15).

6. Filter-paper insert according to one of the preceding claims, **characterized in that** the length of the slots (11, 13, 15) is less than 6 mm, especially less than 5 mm or 4 mm.

7. Filter-paper insert according to one of the preceding claims, **characterized in that** a middle region (9) is provided between the upper region (10) and the bottom region (8), in which more slots (13) are provided than in the bottom region (12) and fewer slots (13) than in the upper region (16).

8. Filter-paper insert according to one of the preceding claims, **characterized in that** the slots (11, 13, 15) are arranged in horizontal rows and the distance between the slots (11, 13, 15) lies between 5 mm and 40 mm, especially 8 mm and 20 mm.

9. Filter-paper insert according to claim 8, **characterized in that** the distance between the slots (11, 13, 15) is smaller in the upper region (10) than in the bottom region (8), preferably by more than 20%.

10. Filter-paper insert according to one of the preceding claims, **characterized in that** the slots (11) in the bottom region (8) are shorter than in the upper region (10), preferably by more than 20%.

11. Filter-paper insert according to one of the preceding claims, **characterized in that** at least the bottom and the upper region (8, 10) are separated from each by a crimped portion.

12. Filter-paper insert according to one of the preceding claims, **characterized in that** the bottom, middle and upper region (8, 9, 10) are respectively enclosed by a frame-like crimped portion.

13. Filter-paper insert according to one of the preceding claims, **characterized in that** the slots (11, 13, 15) are arranged in an S-shaped way.

14. Filter-paper insert according to one of the preceding claims, **characterized in that** the fraction of coffee oil after filtration with the filter-paper insert (1) of 50 g of coffee grounds and 1100 mL of hot water is more than 0.025%, especially more than 0.03%.

15. Filter-paper insert according to one of the preceding claims, **characterized in that** the crimped portion (20, 21, 22) respectively protrudes outwardly on both layers (2) of the filter paper.

## Revendications

1. Filtre en papier (1) pour produire des boissons infusées, notamment du café ou du thé, ayant au moins deux couches (2) de papier filtre réunies au fond (4) et sur les parois latérales opposées (3, 5) pour former un volume intérieur susceptible d'être rempli,
le papier filtre ayant un ensemble de fentes (11, 13, 15) pour augmenter sa perméabilité,
filtre en papier **caractérisé en ce que**
dans une zone inférieure (8) du filtre en papier, au voisinage du fond (4),
- il y a moins de fentes (11) par surface que dans la zone supérieure (10) au voisinage de l'orifice de remplissage et au moins une zone du papier filtre est imprimée avec une fente (11, 13, 15),
* l'impression (20, 21, 22) étant essentiellement en forme de pot et la fente (11, 13, 15) étant réalisée dans le segment du fond (25) de l'impression (20, 21, 22).

2. Filtre en papier selon la revendication 1,
**caractérisé en ce que**
les fentes (15) sont plus longues dans la zone supérieure (10) que dans la zone inférieure (12).

3. Filtre en papier selon la revendication 1 ou 2,
**caractérisé en ce que**
les fentes (11, 13, 15) ont une forme ondulée.

4. Filtre en papier selon l'une des revendications précédentes,
**caractérisé en ce que**
la longueur des fentes (11, 13, 15) est supérieure à 1,5 mm et notamment supérieure à 2,5 mm.

5. Filtre en papier selon l'une des revendications précédentes,
**caractérisé en ce que**
l'amplitude des fentes ondulées (11, 13, 15) est égale à au moins 20 % et de préférence à au moins 30 % de la longueur des fentes (11, 13, 15).

6. Filtre en papier selon l'une des revendications précédentes, **caractérisé en ce que**
la longueur des fentes (11, 13, 15) est inférieure à 6 mm et notamment inférieure à 5 mm ou 4 mm.

7. Filtre en papier selon l'une des revendications précédentes,
**caractérisé en ce qu'**
une zone intermédiaire (9) entre la zone supérieure (10) et la zone inférieure (8) a plus de fentes (13) que dans la zone inférieure (12) et moins de fentes (13) que dans la zone supérieure (16).

8. Filtre en papier selon l'une quelconque des revendications précédentes,
**caractérisé en ce que**
les fentes (11, 13, 15) sont réparties en rangées horizontales et l'intervalle entre les fentes (11, 13, 15) est compris entre 5 mm et 40 mm et notamment entre 8 mm et 20 mm.

9. Filtre en papier selon la revendication 8,
**caractérisé en ce que**
l'intervalle entre les fentes (11, 13, 15) dans la zone supérieure (10) est inférieur à celui dans la zone inférieure (8) et cela de préférence de plus de 20 %.

10. Filtre en papier selon l'une des revendications précédentes,
**caractérisé en ce que**
dans la zone inférieure (8), les fentes (11) sont plus courtes que dans la zone supérieure (10) de préférence de plus de 20 %.

11. Filtre en papier selon l'une des revendications précédentes,
**caractérisé en ce qu'**
au moins la zone inférieure et la zone supérieure (8, 10) sont séparées l'une de l'autre par une impression.

12. Filtre en papier selon l'une des revendications précédentes,
**caractérisé en ce que**
la zone inférieure, la zone intermédiaire et la zone supérieure (8, 9, 10) sont entourées chacune par une impression en forme de cadre.

13. Filtre en papier selon l'une des revendications précédentes,
**caractérisé en ce que**
les fentes (11, 13, 15) ont une forme de S.

14. Filtre en papier selon l'une quelconque des revendications précédentes,
**caractérisé en ce que**
la part d'huile de café après filtrage avec le papier filtre (1) de 50 g de farine de café et 1100ml d'eau chaude est supérieure à 0,025 % et notamment supérieure à 0,03 %.

15. Filtre en papier selon l'une des revendications précédentes,
**caractérisé en ce que**
l'impression (20, 21, 22) des deux couches (2) du papier filtre est à chaque fois en saillie vers l'extérieur.
